# EUROPEAN PATENT APPLICATION

(11) **EP 1 447 959 A1**
(43) Date of publication of application: **18.08.2004**
(21) Application number: 03255057.6
(22) Date of filing: 14.08.2003
(51) Int. Cl.: H04M 1/27

(54) **User programmable voice dialing for mobile handset**

(30) Priority: 14.02.2003 US 367472
(71) Applicant: LUCENT TECHNOLOGIES INC., Murray Hill, New Jersey 07974-0636 (US)
(72) Inventor: Han, Keli, Naperville Illinois 60563 (US); Zhou, Joe Ping, Naperville Illinois 60565 (US); Wei, Zhong X., Naperville Illinois 60563 (US); Zhang, Ruihua, Naperville Illinois 60565 (US)
(74) Representative: Watts, Christopher Malcolm Kelway, Dr.

(57) **Abstract**

A method of operating a telecommunications device (10) is provided. The method includes receiving and storing a plurality of first audio samples. Each of the first samples corresponds to one of a set of individual dialing elements, the set of individual dialing elements including numeric digits 0-9. The method also includes receiving and storing a plurality of second audio samples. Each of the second samples corresponds to one of a set of executable commands, the set of executable commands including a first command defined to dial a phone number loaded into a buffer (22). A plurality of audio inputs are received and compared to the stored samples. Individual dialing elements are loaded into the buffer **(22)** in response to receiving audio inputs substantially matching first samples corresponding to the respective individual dialing elements. The individual dialing elements loaded in the buffer (22) define the phone number. The phone number in the buffer (22) is dialed in response to receiving an audio input substantially matching the second sample corresponding to the first command.

## Description

### Field

The present invention relates to the art of wireless telecommunications, It find particular application in conjunction with a mobile handset or mobile station (MS) of a cellular telecommunications network, and will be described with particular reference thereto. However, it is to be appreciated that the present invention is also amenable to other like applications, e.g., telephones in general.

### Background

A MS (e.g., a mobile telephone, wireless personal digital assistant (PDA), wireless equipped portable or laptop computer, etc.) is often provisioned with an electronic directory into which a user selectively programs or otherwise stores desired telephone numbers, e.g., frequently dialed numbers. Various such electronic directories and their implementations are commonly known. Typically, each entry in the directory contains a multi-digit phone number (PN) along with an associated name of the party to which the PN belongs.

There is interest in providing hands free operation of telephones, particularly, in the case of a MS. Hands free operation of a MS is often desired for the sake of convenience or when a users hands are engaged with other tasks. For example, hands free operation of a MS while driving an automobile allows the driver to keep their hands on the steering wheel or otherwise occupied with the safe operation of the vehicle. Accordingly, MS's have been developed which permit voice activated dialing of entries stored in their electronic directory. In one example, to dial one of the PNs in the directory, a user would first manually push a button on the MS to signal that voice activated dialing was being invoked. Once invoked, the MS detects for audible input for an allotted time period. During the allotted time period, the user may speak a word or phrase that is received by the MS (e.g., usually the name associated with an entry). If there is a suitable match to a prerecorded audible word or phrase that is indexed or otherwise linked to an entry in the electronic directory, then the multi-digit PN for that entry is dialed and sent. When the call is finished or to otherwise hang-up or terminate the connection, the user again has to manually press a button, e.g., an "end" button.

While providing some degree of hands free operation, the aforementioned example of a typical voice activated dialing feature is limited in certain respects. For example, initiation and termination of each call still involve some hand operation of the MS, albeit usually less than for typical manual operation. The number of different PNs that can be dialed using this type of voice activated dialing feature is also limited insomuch as the only PNs that can be dialed are those that have been stored in the electronic directory. For example, more recently obtained PNs that the user has not yet had a chance to program into the electronic directory cannot be voice dialed; PNs not frequently called, and hence not in the electronic directory, or PNs that for some other reason the user does not want in the electronic directory, likewise cannot be voice dialed. Additionally, due to memory constrains, the number of audible words or phrases that can be prerecorded is limited. Therefore, the number of electronic directory entries that can be indexed or linked to a prerecorded audible word or phrase is similarly limited. That is to say, often times all the entries in the electronic directory cannot even be dialed with this type of voice activate dialing feature.

The present invention contemplates a new and improved voice dialing feature, method and/or MS incorporating the same which overcomes the above-referenced problems and others.

### Summary

In accordance with an aspect of the present invention, a method of operating a telecommunications device includes: receiving a plurality of first audio samples, each of the first samples corresponding to one of a set of individual dialing elements, the set of individual dialing elements including numeric digits 0-9; receiving a plurality of second audio samples, each of the second samples corresponding to one of a set of executable commands, the set of executable commands including a first command defined to dial a phone number loaded into a buffer; storing the received first and second samples; receiving a plurality of audio inputs; comparing the audio inputs to the stored samples; loading individual dialing elements into the buffer in response to receiving audio inputs substantially matching first samples corresponding to the respective individual dialing elements, the individual dialing elements loaded in the buffer defining the phone number; and, dialing the phone number in the buffer in response to receiving an audio input substantially matching the second sample corresponding to the first command.

In accordance with another aspect of the present invention, a telecommunications device has a buffer into which selected individual dialing elements are loaded to define a phone number. The individual dialing elements are selected from a set thereof including numeric digits 0-9. A memory stores a plurality of first and second audio samples. Each of the first samples corresponds to one of the set of individual dialing elements, and each of the second samples corresponds to one of a set of executable commands, the set of executable commands including a first command defined to dial the phone number loaded into the buffer. Also included is a microphone arranged to receive audio inputs, and a voice recognition module that compares received audio inputs to the samples stored in the memory. Operatively, individual dialing elements are loaded into the buffer in response to the voice recognition module substantially matching received audio inputs with first samples corresponding to the respective individual dialing elements, and the phone number in the buffer is dialed in response to the voice recognition module substantially matching a received audio input with the second sample corresponding to the first command.

In accordance with yet another aspect of the present invention, a telecommunications device includes: means for receiving a plurality of first audio samples, a plurality of second audio samples and a plurality of selectively entered audio inputs, each of the first samples corresponding to one of a set of individual dialing elements, the set of individual dialing elements including numeric digits 0-9, and each of the second samples corresponding to one of a set of executable commands, the set of executable commands including a first command defined to dial a phone number; means for storing the received first and second samples; means for comparing the audio inputs entered to the stored samples; means for buffering individual dialing elements in response to receiving entered audio inputs substantially matching first samples corresponding to the respective individual dialing elements, the buffered individual dialing elements defining the phone number; and, means for dialing the phone number in response to receiving an entered audio input substantially matching the second sample corresponding to the first command.

One advantage of the present invention is the ability to provide for hands free voice dialing of PNs not pre-stored in the MS.

Another advantage of the present invention is the ability to provide for voice operation in the users language and/or dialect.

Still further advantages and benefits of the present invention will become apparent to those of ordinary skill in the art upon reading and understanding the following detailed description of the preferred embodiments.

### Brief Description of the Drawings

The invention may take form in various components and arrangements of components, and in various steps and arrangements of steps. The drawings are only for purposes of illustrating preferred embodiments and are not to be construed as limiting the invention. Further, it is to be appreciated that the drawings are not to scale.
FIGURE **1** is a block diagram showing an exemplary architecture of a MS in accordance with aspects of the present invention.
FIGURE **2** is block diagram showing an exemplary operational learning mode of the MS of FIGURE 1 in accordance with aspects of the present invention.
FIGURE **3** is diagrammatic illustration showing an exemplary process in accordance with aspects of the present invention by which the MS of FIGURE **1** learns a voice input.
FIGURE **4** is block diagram showing an exemplary operational voice dialing mode of the MS of FIGURE **1** in accordance with aspects of the present invention.
FIGURE **5** is diagrammatic illustration showing an exemplary process in accordance with aspects of the present invention by which the MS of FIGURE 1 is used to establish a call in response to voice input.

### Detailed Description

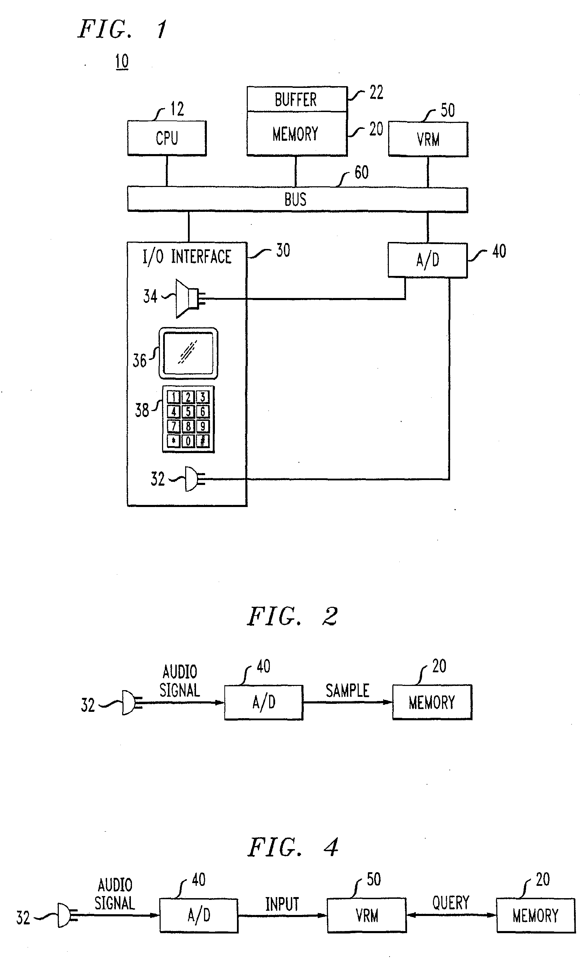

With reference to FIGURE **1,** a MS **10** of a wireless telecommunications network is equipped with a voice dialing feature that provides for hands free calling of selected PNs. With the exception of those details noted, the MS **10** may be similar in structure and/or functionality to other appropriate MS's commonly known in the art. The example embodiment described herein for illustrative purposes is a mobile handset or telephone. However, it is to be appreciated that other types of MS's, line-based corded or cordless telephones and the like are equally suitable embodiments.

As shown, the MS **10** includes a central processing unit (CPU) **12** that controls and regulates operation of the MS **10.** Suitably, a memory **20** stores selected data and/or information, however, another type of storage device may be employed. The memory **20** includes a dialing buffer **22** where individual dialing elements of a PN (e.g., digits) are selectively entered and held for dialing purposes. An input/output (I/O) interface **30** is employed for user interaction with and/or operation of the MS **10**. Suitably, the interface **30** includes: a microphone **32,** a speaker **34**, a display **36** and a keypad **38**, as is typical for a MS. An analog to digital converter (A/D) **40** processes signals from the microphone **32** and/or to the speaker **34.** Suitably, the A/D **40** takes the form of a vocoder as is commonly known in the art. The MS **10** is also equipped with a voice recognition module (VRM) **50.** A data bus **60** or other like data and/or signal routing device supports communication between the respective components of the MS **10.**

The MS **10** suitably has three modes that a user **70** (FIGURES **2-5)** may select as desired via the interface **30**. For example, the modes may be presented as items in a menu on the display **36** from which the user **70** chooses or selects a desired mode by pressing a button or series of buttons on the keypad **38**. Nominally, the modes are termed herein as the normal mode (NM), the learning mode (LM) and the voice dialing mode (VDM). In the NM, the MS **10** operates as a standard MS, i.e., with dialing and customary MS operations being carried out manually or otherwise in the usual manner.

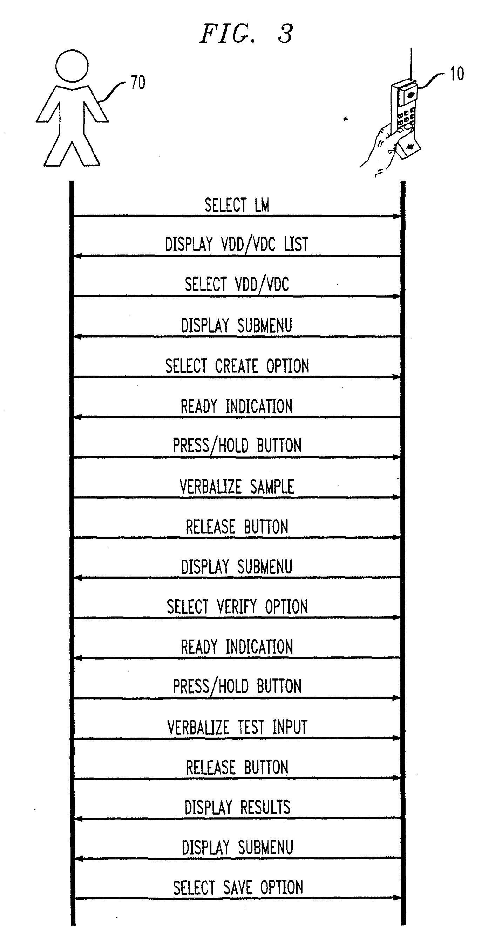

With reference to FIGURES **2** and **3**, the LM is used to set up the voice dialing feature of the MS **10**. That is to say, in the LM, the MS **10** is "taught" selected audio or voice inputs by the user **70**. These voice inputs can be categorized as one of two types, nominally, a voice dialing digit (VDD) and a voice dialing command (VDC). A VDD is a voice input belonging to a defined set of characters that may be entered as individual dialing elements, e.g., the individual digits of a PN. Suitably, the defined set of characters includes the numbers 0-9, and optionally, the letters of the alphabet, the pound sign (#) and the asterisk symbol (*). A VDC is a voice input belonging to a defined set of call initiation, dialing and/or call termination related executable commands. Suitably, the defined set of executable commands includes: a "dial ready" command, an "end dialing" command, a "send" command and a "terminate call" command.

In the LM, audio samples for the VDDs and VDCs are entered by the user **70** into the MS **10** and stored in memory **20**. With particular reference to FIGURE **2**, the microphone **32** is used to receive or detect a spoken or otherwise audible sample for a given VDD or VDC. The received sample is digitized by the A/D (or vocoder) **40** and stored in memory **20**, e.g., at a designated location for the respective VDD or VDC.

Referring to FIGURE **3**, the MS **10** learns the VDDs and VDCs in the LM by obtaining from the user **70** and storing for each one a spoken or otherwise audible sample corresponding thereto. For simplicity, the exemplary process illustrated shows the MS **10** learning one VDDNDC. However, it is to be appreciated that the process may be repeated for each VDD and VDC to be learned by the MS **10.**

The process of FIGURE **3** is initiated by the user **70** selecting the LM from a mode selection menu displayed on the display **36** of the MS **10.** The MS **10** then presents a list of all the available VDDs and VDCs on the display **36** from which the user **70** selects a desired one. Next, the MS **10** displays a submenu of options. The submenu suitably includes options for creating, verifying and saving the selected VDD/VDC. As shown, the user **70** selects the create option to enter a new voice sample for the selected VDDNDC. The MS **10** responses with a "ready" indication to the user **70**, e.g., by outputting an appropriate message to the display **36** and/or providing an audible signal or beep from the speaker **34**. The ready indication informs the user **70** that the MS **10** is set to receive the sample. The user **70** then presses and holds a button on the keypad **38**, e.g., a designated function key, to signal the beginning of the sample's entry. While holding the button, the user **70** verbalizes the sample they want assigned to the selected VDDNDC into the microphone **32**, and then releases the button signaling the completion of the sample's entry. The entered sample is temporarily stored accordingly (see FIGURE **2**).

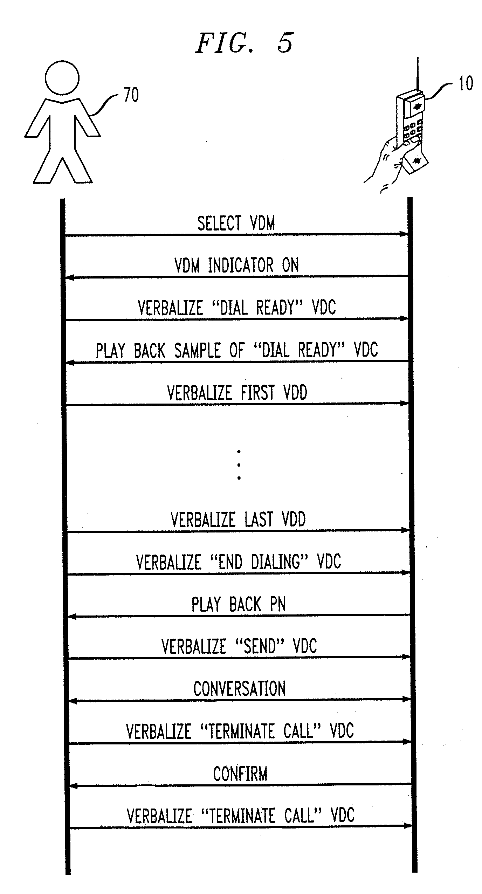

The MS **10** again displays the submenu. As shown, this time the user **70** selects the verify option. In response, the MS **10** outputs a ready indication to the user **70** to inform them that the MS **10** is set to receive a test input. The user **70** then again presses and holds the appropriate button on the keypad **38** to signal the being of the test input. While holding the button, the user **70** verbalizes the test input into the microphone **32**, and then releases the button signaling the completion of the test input's entry. The test input is routed to the VRM **50**, e.g., in the same manner an actual voice input would be in the VDM (see FIGURE **4**). The VRM **50** compares the test input to the sample stored in the memory **20** at the designated location for the VDDNDC being verified. Provided there is a substantial match, i.e., within a determined tolerance, the test is verified, otherwise the test fails. In either case, the verification results are provided to the user **70** and the submenu is displayed once again. Assuming successful verification, the user **70** selects the save option thereby retaining the previously entered sample in the memory **20**.

It is to be appreciated that the voice dialing feature described herein is a multi-lingual voice dialing feature. That is to say, the MS **10** is not pre-programmed for voice operation using a particular language/dialect, e.g., the samples saved in the LM and/or inputs entered in the VDM may be verbalized in the users native or otherwise chosen language and/or dialect. Moreover, the particular sample word or phrase chosen for association with a given VDDNDC may be arbitrarily selected as desired by the user. Suitably, the user is encouraged to verbalize words or phrases as samples (and hence use them as inputs) that are rationally related to the VDDNDC to which they correspond. However, in some instances (e.g., the terminate call VDC), the user may not want to employ words or phrases that frequently occur in common conversation to avoid unintended recognition of a voice input.

With reference to FIGURES **4** and **5**, the VDM is used for hands free operation of the MS **10**. In the VDM, call placement and termination related operations are selected and/or controlled by the user **70** providing voice or otherwise audible input to the MS **10,** i.e., by using the VDDs and VDCs. Once the VDM is activated, the user **70** may selectively place and/or terminate one or more calls without further manual operation of the MS **10**, including dialing desired PNs that have not been pre-saved or otherwise stored ahead of time, e.g., in an electronic directory.

With particular reference to FIGURE **4**, in the VDM, the microphone **32** is used to receive or detect a spoken dr otherwise audible input from the user **70**. The received audio input is digitized by the A/D (or vocoder) **40** and routed to the VRM **50**. The VRM **50** compares the audio input to the samples stored in the memory **20**. When the VRM **50** finds a sufficiently close match, i.e., within a prescribed tolerance, the VDD or VDC corresponding to the matching sample is identified, e.g., by the memory location in which the matching sample was stored. In response, the MS **10**, under the direction of the CPU **12**, carries out a designated operation corresponding to the VDD or VDC identified, e.g., entering the individual dialing element associated with the VDD into the dialing buffer **22**, or executing the command associated with the VDC, such as the "send" command whereby the MS **10** dials and sends the PN in the dialing buffer **22** to establish a call. If there is no match or the voice input is otherwise inappropriate, a suitable error handling routine is triggered. The error handling routine optionally reports the fact and/or nature of the encountered error to the user **70** through the interface **30**, and provides the user **70** an opportunity for curing the same, e.g., by requesting re-entry of an input.

FIGURE **5** shows the user **70** establishing a call to a desired PN which is not pre-stored on the MS **10**. The process of FIGURE **5** is initiated by the user **70** selecting the VDM from a mode selection menu displayed on the display **36** of the MS **10**. Note, selecting the VDM is preferably the only manual portion of the process. Additionally, it is to be appreciated that the manual selection of the VDM does not have to be carried for each call individually, i.e., multiple calls can be made with a single activation of the VDM.

Upon activation of the VDM, the MS **10** provides the users **70** an indication of the same, e.g., via a suitable message presented on the display **36** or illumination of a designated VDM indicator light. When they want to make a call, the user **70** selectively verbalizes the "dial ready" VDC. The "dial ready" VDC signals the MS **10** that the user **70** desires to enter a series of dialing elements into the dialing buffer **22**. Provided the input VDC matches the sample in the memory **20** therefor, the MS **10** responses by entering a corresponding ready state and returning to the user **70** an appropriate indication of the same. Suitably, the indication is a playback of the matching sample from the memory **20,** i.e., the digitized sample is routed through the A/D (or vocoder) **40** to the speaker **34** where it is output.

The user **70** then verbalizes a series of VDDs corresponding to the individual dialing elements that are entered into the dialing buffer **22.** Verbalization of the "end dialing" VDC indicates to the MS **10** that the user **70** has finished entering the PN into the dialing buffer **22.** The MS **10** responses to acknowledge receipt of the input "end dialing" VDC, e.g., by playing back the PN entered into the buffer **22**. Again, playback may be accomplished using the samples from the memory **20**. Assuming the PN played back is in fact the PN to be dialed, the user **70** verbalizes the "send" VDC. The MS **10** responds accordingly, i.e., if the input matches the sample, by dialing and sending the PN in the buffer **22** to establish a call.

To end a call and/or hang-up the MS **10**, the user **70** verbalizes the "terminate call" VDC. To ensure the "terminate call" VDC is in fact intended and not, e.g., part of a conversation, the MS **10** requests confirmation from the user **70**. The confirmation request suitably includes presenting a query message on the display **36**, or by providing some other indication that a potential "terminate call" VDC has been registered, e.g., by playing back the matching sample from the memory **20**. As shown, the confirmation may then take the form of the user **70** repeating the "terminate call" VDC. Upon the second registered "terminate call" VDC, the MS **10** hangs-up or otherwise ends the call. If the second "terminate call" VDC is not registered in a prescribed time period, the first one will be considered as falsely registered and the call will continue. Optionally, call termination may be carried out automatically if a prescribed period of silence is detected.

It is to be appreciated that particular elements or components described herein may have their structure and/or functionality suitably configured and/or implemented as hardware, software, firmware or a combination of the same. Additionally, it is to be appreciated that certain elements described herein as incorporated together may under suitable circumstances be stand alone elements or otherwise divided. Similarly, a plurality of particular functions described as being carried out by one particular element may be carried out by a plurality of distinct elements acting independently to carry out individual functions, or certain individual functions may be split-up and carried out by a plurality of distinct elements acting in concert. Alternately, some elements or components otherwise described herein as distinct from one another may be physically or functionally combined where appropriate.

The invention has been described with reference to the preferred embodiments. Obviously, modifications and alterations will occur to others upon reading and understanding the preceding detailed description. It is intended that the invention be construed as including all such modifications and alterations insofar as they come within the scope of the appended claims or the equivalents thereof.

## Claims

1. A method of operating a telecommunications device, said method comprising:
receiving a plurality of first audio samples, each of said first samples corresponding to one of a set of individual dialing elements, said set of individual dialing elements including numeric digits 0-9;
receiving a plurality of second audio samples, each of said second samples corresponding to one of a set of executable commands, said set of executable commands including a first command defined to dial a phone number loaded into a buffer;
storing the received first and second samples;
receiving a plurality of audio inputs;
comparing the audio inputs to the stored samples;
loading individual dialing elements into the buffer in response to receiving audio inputs substantially matching first samples corresponding to the respective individual dialing elements, said individual dialing elements loaded in the buffer defining the phone number; and,
dialing the phone number in the buffer in response to receiving an audio input substantially matching the second sample corresponding to the first command.

2. The method of claim **1**, wherein the set of executable commands includes a second command defined to terminate calls established with the telecommunications device, said method further comprising:
indicating that a call termination request has been recognized in response to receiving an audio input substantially matching the second sample corresponding to the second command; and,
terminating a call established with the telecommunications device in response to obtaining confirmation of the call termination request.

3. The method of claim **2,** wherein confirmation of the call termination request is obtained by receiving a second audio input substantially matching the second sample corresponding to the second command within a prescribed time period.

4. The method of claim **1**, wherein receiving each of the first and second samples comprises:
opening a microphone in response to a user selecting a designated button;
keeping the microphone open while the designated button is selected; and,
closing the microphone upon release of the designated button;
wherein the received audio sample is acquired by the open microphone.

5. The method of claim **1**, further comprising:
digitizing the received first and second audio samples prior to storing them; and,
digitizing the received audio inputs prior to comparing them with the stored samples.

6. The method of claim **1**, further comprising:
playing back a stored audio sample in response to a received audio input substantially matching the same.

7. A telecommunications device comprising:
means for receiving a plurality of first audio samples, a plurality of second audio samples and a plurality of selectively entered audio inputs, each of said first samples corresponding to one of a set of individual dialing elements, said set of individual dialing elements including numeric digits 0-9, and each of said second samples corresponding to one of a set of executable commands, said set of executable commands including a first command defined to dial a phone number;
means for storing the received first and second samples;
means for comparing the audio inputs entered to the stored samples;
means for buffering individual dialing elements in response to receiving entered audio inputs substantially matching first samples corresponding to the respective individual dialing elements, said buffered individual dialing elements defining the phone number; and,
means for dialing the phone number in response to receiving an entered audio input substantially matching the second sample corresponding to the first command.

8. The telecommunications device of claim **7,** wherein the receiving means includes a microphone.

9. The telecommunications device of claim **7**, wherein the storing means includes a memory.

10. The telecommunications device of claim **7**, wherein the comparing means includes a voice recognition module.
